# EUROPEAN PATENT SPECIFICATION

(11) **EP 0 661 318 B1**
(45) Date of publication and mention of the grant of the patent: **06.05.1999**
(21) Application number: 93310610.6
(22) Date of filing: 29.12.1993
(51) Int. Cl.: C08G 18/48

(54) **Polyurethane based ink retainer and method of its making**
Polyurethan enthaltendes Tintenrückhaltesystem und Verfahren zu dessen Herstellung
Dispositif de rétention d'encre à base de polyuréthane et procédé de sa fabrication

(43) Date of publication of application: 05.07.1995
(73) Proprietor: BRIDGESTONE CORPORATION, Tokyo 104-0031 (JP)
(72) Inventor: Yasunaga, Kuniaki, c/o Bridgestone Corp., Yokohama-shi, Kanagawa-ken (JP); Hasegawa, Hajime, c/o Bridgestone Corp., Yokohama-shi, Kanagawa-ken (JP)
(74) Representative: Stoner, Gerard Patrick

(56) References cited:
- FR-A- 1 567 202
- US-A- 3 703 564

## Description

This invention relates to an ink retainer received in an ink tank for use in printers.

### BACKGROUND

Recording apparatus such as printers are equipped with ink tanks. Some ink tanks are stationary, others are used under dynamic conditions. In the latter case, the ink tanks need to withstand sudden vibrations and impacts and desirably should prevent the ink therein from waving and entraining air bubbles. A common practice is to place a plastic foam block in the tank to absorb the ink.

In general, such plastic foam blocks are received in the tanks in a compressed state. A proper degree of compression provides the plastic foam block with optimum ink retaining capacity.

However, it is quite difficult in practice to compress and insert plastic foam blocks into tanks. Often they are partially turned over or wrinkled. If the foam block in the container is locally deformed, this can form a preferential path for ink or even form a shortcut air flowpath from a vent to an exit port of the tank, allowing air directly to the exit port. It is difficult to manufacture satisfactory ink tanks in a simple manner.

Typical for the plastic foam are polyurethane foams using polyether polyol as one starting component, especially open-cell reticulated polyurethane foams having no cell membranes. The cell membranes are generally removed by immersing polyurethane foams in acid or alkali solution, or by an explosive method generally carried out by causing oxygen and hydrogen gases to penetrate into the polyurethane foam followed by ignition.

Upon insertion into the tank the polyurethane foam is compressed, mainly for the purpose of reducing the spacing of cells in the reticulated structure so as to exert sufficient capillary action to retain ink. Usually polyurethane foam is heated and compressed to provide semi-permanent deformation. Since heat is not uniformly conducted through the polyurethane foam because of its insulative properties, compression can be localized, e.g. at the surface, resulting in uneven deformation. Additionally, the polyurethane foam may be decomposed by the heat giving decomposition products which may later leached into the ink and alter its composition, for example, resulting in reduced surface tension.

Alternatively, polyurethane foam is mechanically compressed in order to insert into a tank. The recovering force of the compressed foam increases friction between the compressed foam and a guide plate or tank inner wall, so that the foam is liable to turn over or wrinkle. It is thus very difficult to smoothly insert the foam into the tank under compression.

Thermoset melamine condensates are known as plastic foams having open fine cells. As compared with polyurethane foam, melamine foam is mechanically weak and liable to break upon insertion into a tank. In addition, melamine foam often contains some voids having a much larger diameter than the ordinary cells ; such large voids are detrimental to ink retention performance.

For polyurethane foam to be used as an ink retainer without compression, it should contain fine cells having a diameter approximately equal to the cell diameter in the melamine condensate (an average cell diameter of 100 to 300 µm), In the case of polyester-type polyurethane foams having a cell diameter of such order can be readily produced, but unfortunately these are hydrolysable and leach into the ink composition.

An object of the present invention is to provide a novel ink retainer using specific kinds of polyurethane foam which can be inserted in an ink tank without compression.

The present invention provides an ink retainer in the form of a flexible polyurethane foam which is prepared from a specific polyether polyol as one main component and contains cells having a diameter of 80 to 400 µm. More particularly, the flexible polyurethane foam is prepared by a method involving the steps of using polyether polyol having a viscosity of 1.5 to 30 Pa.s (1,500 to 30,000 centipoise), isocyanate, foam stabilizer, and catalyst as main components, together with water as blowing agent, at 0.9 to 2.5 parts by weight per 100 parts by weight of the polyether polyol, and admitting the main components concurrently into a mixing head where the main components are mixed to effect condensation and foaming reactions. Preferably, all or part of the polyether polyol is a copolymeric polyol containing a styrene and/or acrylonitrile polymer or an aromatic ester-modified polyether polyol. The method is an aspect of the invention claimed.

The flexible polyurethane foam used herein contains cells having a diameter of 80 to 400 µm. Preferably the majority of cells have a diameter of 100 to 300 µm. Such urethane foam can be inserted into a tank without compression whereupon the foam can serve as an effective ink retainer.

The urethane foam having a relatively small, uniform cell size serves as an ink retainer without substantial compression. In fact, this polyurethane foam is effective in retaining and releasing ink.

### BRIEF DESCRIPTION OF THE DRAWING

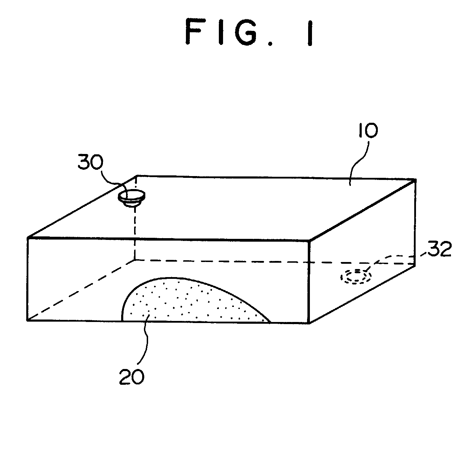

The only figure, FIG. 1 is a partially cut-away perspective view of an example of an ink container.

The polyether type polyurethane foam which constitutes an ink retainer according to the present invention is prepared from a polyether polyol, an isocyanate, a foam stabilizer, and a catalyst as main components.

The first main component or polyether polyol has a viscosity of 1.5 to 30 Pa.s (1,500 to 30,000 centipoise), preferably 3 to 20 Pa.s (3,000 to 20,000 centipoise), more preferably 5 to 15 Pa.s (5,000 to 15,000 centipoise) at 25°C. A plurality of polyether polyols may be used as long as they can form a uniform mixture having a viscosity in this range. Examples of the polyether polyol include polyether polyols obtained by ring-opening polymerization of an alkylene oxide having up to 3 carbon atoms with glycerin, polymeric polyols having styrene and/or acrylonitrile addition polymerized to the first-mentioned polyether polyols, aromatic ester-modified polyether polyols obtained by ring-opening polymerization of propylene oxide and phthalic anhydride to the first-mentioned polyether polyols, and mixtures thereof.

The second main component or isocyanate may be selected from those isocyanates commonly used in the preparation of polyurethane, for example, tolylene diisocyanate (TDI). The amount of isocyanate used is preferably about 15 to 40 parts by weight per 100 parts by weight of the polyether polyol component.

The catalyst and foam stabilizer may be selected from conventional ones. The catalysts include amine catalysts such as triethylenediamine and tin catalysts such as stannous octoate. The stabilizers include silicone foam stabilizers. Their addition amount is preferably about 0.1 to 1.0 parts by weight of an amine catalyst, about 0 to 0.5 parts by weight of a tin catalyst, and about 0.1 to 2.0 parts by weight of a silicone foam stabilizer per 100 parts by weight of the polyether polyol component.

In addition to the main components, water is added as a blowing agent in an amount of from 0.9 to 2.5 parts by weight per 100 parts by weight of the polyether polyol component. With this amount, there can be produced a polyurethane foam having a density of from 0.04 to 0.1 g/cm³. A foaming aid such as Freon and methylene chloride may be added, typically in an amount of up to about 3.0 parts per 100 parts by weight of the polyether polyol component.

These components are concurrently admitted into a mixing head where the components are mixed to effect condensation and foaming reactions. In order to provide a relatively small cell diameter, the components are mixed in the mixing head while admitting 200 to 700 cm³ of air per 100 kg of the polyether polyol component.

The resulting polyurethane foam has cells having a diameter of 80 to 400 µm. If there are cells having a considerably smaller diameter than the average diameter, such fine cells exert more capillary action than the remaining cells, resulting in the drawback that ink supply is prematurely stopped although an amount of ink is still retained in the foam. To avoid such premature depletion, it is desired that more than about two thirds of foam cells have a diameter of 100 to 300 µm. It was found that in foams prepared by the method of the present invention, at least 90% of cells had diameters within this range. In this respect too, the foam is suited as an ink retainer.

In preparing the polyurethane foam, the polyether polyol as one main component should have a viscosity of 1.5 to 30 Pa.s (1,500 to 30,000 centipoise) at 25°C. With a viscosity of less than 1.5 Pa.s (1,500 centipoise), cells created at the initial foaming stage have a low gel strength so that adjoining cells would readily join together, resulting in a foam having diversified cell diameters. A viscosity of more than 30 Pa.s (30,000 centipoise) would make it difficult to mix the components and agitate feed air in the mixing head. Short mixing of the components exacerbates physical properties and insufficient refinement of blowing air causes cells to vary in size.

From 0.9 to 2.5 parts by weight of water is used as a blowing agent per 100 parts by weight of the polyether polyol component. Less than 0.9 parts of water would result in a foam product having a higher specific gravity and hence, a reduced effective void content, which is inadequate to contain ink. If the amount of water exceeds 2.5 parts, the one-shot process of producing a polyurethane foam requires more equivalents of isocyanate so that the reaction solution may have a lower viscosity, resulting in an uneven cell size as the case where the polyol has a lower viscosity.

A foaming aid such as Freon and methylene chloride is sometimes used in polyurethane foaming. It is desired to restrict the amount of the foaming aid to less than about 3 parts by weight because the foaming aid is so low in viscosity that the cell size may become uneven.

The resulting polyurethane foam may be used without removing cell membranes. However for ink retainers it is preferred to use a polyurethane foam having no cell membranes. The cell membranes of the polyurethane foam are removed by the conventional methods, for example by immersing the foam having cell membranes in acid or alkali, or by an explosive method.

The ink retainer consisting of the polyurethane foam is inserted in an ink tank without compression.

FIG. 1 shows an ink storage container comprising a container casing 10 and an ink retainer 20 placed therein for absorbing and retaining an aqueous liquid. The container casing may be formed in a box shape having an air vent 30 at the top and an ink exit port 32 at the bottom as shown in FIG. 1.

### EXAMPLE

Examples of the present invention are given below by way of illustration and not by way of limitation.

### Examples 1-2 & Comparative Example 1

### Foam

Different polyether polyols were used. Example 1 used a glycerin base styrene grafted copolymer polyol having a viscosity of 4 Pa.s (4,000 centipoise) commercially available from Dow Chemical Co. Example 2 used a mixture of a glycerin base aromatic ester-modified polyether polyol and a glycerin base polypropylene glycol having a viscosity of 15 Pa.s (15,000 centipoise) commercially available from Takeda Pharmaceutical K.K. Comparative Example 1 used a glycerin base polypropylene glycol having a viscosity of 0.5 Pa.s (500 centipoise). Using such a polyether polyol, TDI-80, triethylenediamine, stannous octoate, silicone surface active agent and water, a flexible polyurethane foam was prepared. For condensation and foaming, a UBT continuous foaming machine commercially available from Viking Co. was used.

Cell membranes were removed from the resulting polyurethane foam by an explosive method, obtaining a three-dimensional reticulated structure.

The starting components and the properties of the flexible polyurethane foam are shown in Table 1.

**Table 1**

| | Example | | Comparative Example 1 |
|---|---|---|---|
| | 1 | 2 | |
| Composition, parts by weight | | | |
| Polyol | V3940 *1 100 | 3P56B *2 100 | V3022J *3 100 |
| TDI-80 (index) | (100) | (100) | (100) |
| Water | 1.2 | 1.2 | 1.2 |
| Triethylenediamine | 0.4 | 0.4 | 0.4 |
| Stannous octoate | 0.2 | 0.2 | 0.2 |
| Silicone surfactant *4 | 0.8 | 0.8 | 0.8 |
| Aeration (cm³/100 kg polyol) | 500 | 500 | 500 |

| Properties | | | |
|---|---|---|---|
| Specific gravity | 0.065 | 0.060 | 0.065 |
| Average cell diameter (µm) | 300 | 250 | 500 |

| | | | |
|---|---|---|---|
| *1 a glycerin base styrene grafted copolymer polyol (viscosity 4 Pa.s (4,000 centipoise)) commercially available from Dow Chemical Co. | | | |
| *2 a mixture of a glycerin base aromatic 20 ester-modified polyether polyol and a glycerin base polypropylene glycol (viscosity 15 Pa.s (15,000 centipoise)) commercially available from Takeda Pharmaceutical K.K. | | | |
| *3 a glycerin base polypropylene glycol 25 (viscosity 0.5 Pa.s (500 centipoise)) commercially available from Dow Chemical Co. | | | |
| *4 L-520 commercially available from Nippon Unicar K.K. | | | |

The polyurethane foams of Examples 1 and 2 had an average cell diameter sufficient to retain ink. The urethane foam of Comparative Example 1 had an average cell diameter of 500 µm which was too large for the foam to serve as an ink retainer when inserted into an ink tank.

### Ink retention test

Polyurethane foams were evaluated for retention force as ink retainers.

The polyurethane foams of Example 1 and Comparative Example 1 were used in the test. In addition, Comparative Example 2 used a polyurethane foam having an average cell diameter of 800 µm (before compression) which was conventionally used as an ink retainer. Comparative Example 3 used the same polyurethane foam as Comparative Example 2 except that it was compressed by a factor of 3 in one direction. Usually the conventional polyurethane foam was used in this compressed state.

In the ink retention test, each polyurethane foam was cut to a rectangular block of 40 mm × 30 mm × 100 mm (height) and immersed in ink to a height of 15 mm from the bottom. After 24 hours, the height of rising ink was measured. The ink used was an aqueous pigment type ink (Rotring Art Ink). It is to be noted that the sample of Comparative Example 3 was obtained by compressing a sample of 40 mm × 90 mm × 100 mm (height) in one direction so as to reduce the 90 mm side to 30 mm.

The test results are shown in Table 2.

**Table 2**

| | Example 1 | Comparative Example | | |
|---|---|---|---|---|
| | | 1 | 2 | 3 |
| Average cell diameter (µm) | 300 | 500 | 800 | - |
| Specific gravity | 0.065 | 0.065 | 0.035 | 0.105 |
| Rising ink height (mm) | 31 | 15 | 5 | 34 |

It is evident from Table 2 that when compared in rising ink height, the foam of Example 1 has a substantially equal ink retention force to the conventional foam of Comparative Example 3. The polyether polyurethane foam of Example 1 is advantageous over Comparative Example 3 in that it can be used as an ink retainer without compression upon insertion into a tank.

There has been described a flexible polyether type polyurethane foam having sufficiently fine cells to serve as an ink retainer. The foam is of great industrial worth in that it can be inserted into an ink tank without compression.

Although some preferred examples have been described, the skilled person will appreciate that modifications and variations may be made thereto in the light of the general teachings herein.

## Claims

1. An ink retainer comprising an ink-retaining polyurethane foam with foam cell diameters in the range 80 to 400µm, prepared by introducing the following polyurethane foam-forming components:
- polyether polyol having a viscosity in the range 1.5 to 30 Pa.s (1500 to 30000 centipoise) at 25°C;
- isocyanate;
- foam stabilizer;
- catalyst, and
- water as blowing agent, in an amount of from 0.9 to 2.5 parts by weight to 100 parts of the polyether polyol;
concurrently to a mixing head for condensation reaction and foaming to form said foam.

2. An ink retainer according to claim 1 in which all or part of the polyether polyol is copolymeric polyol containing styrene and/or acrylonitrile polymer.

3. An ink retainer according to claim 1 in which all or part of the polyether polyol is aromatic ester-modified polyether polyol.

4. An ink retainer according to any of the preceding claims in which the polyether polyol had a viscosity in the range 5 to 15 Pa.s (5000 to 15000 centipoise) at 25°C.

5. An ink retainer according to any one of the preceding claims in which the foam has a density in the range 0.04 to 0.1g/cm³.

6. An ink retainer according to any one of the preceding claims in which at least 90% of the foam cells have diameters in the range 100 to 300µm.

7. An ink retainer according to any one of the preceding claims in which the cell membranes of the foam have been removed.

8. An ink retainer according to any one of the preceding claims in which the foam is contained in an ink tank without compression.

9. A method of making an ink retainer comprising a polyurethane foam, in which the polyurethane foam is prepared by introducing the following polyurethane foam-forming components:
- polyether polyol having a viscosity in the range 1.5 to 30 Pa.s (1500 to 30000 centipoise) at 25°C;
- isocyanate;
- foam stabilizer;
- catalyst, and
- water as blowing agent, in an amount of from 0.9 to 2.5 parts by weight to 100 parts of the polyether polyol; concurrently to a mixing head for condensation and reaction and foaming to form said foam with foam cell diameters in the range 80 to 400µm.

10. A method according to claim 9 in which all or part of the polyether polyol is copolymeric polyol containing styrene and/or acrylonitrile polymer.

11. A method according to claim 9 in which all or part of the polyether polyol is aromatic ester-modified polyether polyol.

12. A method according to any one of claims 9 to 11 in which the polyether polyol has a viscosity in the range 5 to 15 Pa.s (5000 to 15000 centipoise) at 25°C.

13. A method according to any one of claims 9 to 12 in which the foam is inserted in an ink tank without compression.

## Patentansprüche

1. Tintenrückhaltesystem, umfassend einen Tinte zurückhaltenden Polyurethanschaum mit Schaumzellen-Durchmessern im Bereich von 80 bis 400 µm, der durch gleichzeitiges Einbringen der folgenden Polyurethan-Schaumbildungs-Komponenten in einen Mischkopf zur Kondensationsreaktion und zum Schäumen, um den Schaum zu bilden, hergestellt ist:
- Polyetherpolyol mit einer Viskosität bei 25 °C im Bereich von 1,5 bis 30 Pa.s (1.500 bis 30.000 Centipoise);
- Isocyanat
- Schaumstabilisator;
- Katalysator und
- Wasser als Treibmittel in einer Menge von 0,9 bis 2,5 Gewichtsteilen pro 100 Teile des Polyetherpolyols.

2. Tintenrückhaltesystem nach Anspruch 1, bei dem das gesamte oder ein Teil des Polyetherpolyols copolymeres Polyol ist, das Styrol- und/oder Acrylnitril-Polymer enthält.

3. Tintenrückhaltesystem nach Anspruch 1, bei dem das gesamte oder ein Teil des Polyetherpolyols mit aromatischem Ester modifiziertes Polyetherpolyol ist.

4. Tintenrückhaltesystem nach einem der vorangegangenen Ansprüche, bei dem das Polyetherpolyol bei 25 °C eine Viskosität im Bereich von 5 bis 15 Pa.s (5.000 bis 15.000 Centipoise) aufweist.

5. Tintenrückhaltesystem nach einem der vorangegangenen Ansprüche, bei dem der Schaum eine Dichte im Bereich von 0,04 bis 0,1 g/cm³ aufweist.

6. Tintenrückhaltesystem nach einem der vorangegangenen Ansprüche, bei dem zumindest 90 % der Schaumzellen einen Durchmesser im Bereich von 100 bis 300 µm aufweisen.

7. Tintenrückhaltesystem nach einem der vorangegangenen Ansprüche, bei dem die Zellmembranen des Schaums entfernt worden sind.

8. Tintenrückhaltesystem nach einem der vorangegangenen Ansprüche, bei dem der Schaum nicht zusammengepreßt in einem Tintenbehälter enthalten ist.

9. Verfahren zur Herstellung eines Tintenrückhaltesystems, das einen Polyurethanschaum umfaßt, bei dem der Polyurethanschaum hergestellt wird, indem die folgenden den Polyurethanschaum bildenden Komponenten gleichzeitig in einen Mischkopf zur Kondensation und Reaktion und Schäumung eingebracht werden, um den Schaum mit Schaumzellen-Durchmessern im Bereich von 80 bis 400 µm zu bilden:
- Polyetherpolyol mit einer Viskosität bei 25 °C im Bereich von 1,5 bis 30 Pa.s (1.500 bis 30.000 Centipoise);
- Isocyanat;
- Schaumstabilisator;
- Katalysator und
- Wasser als Treibmittel in einer Menge von 0,9 bis 2,5 Gewichtsteilen pro 100 Teile des Polyetherpolyols.

10. Verfahren nach Anspruch 9, bei dem das gesamte oder ein Teil des Polyetherpolyols copolymeres Polyol ist, das Styrol- und/oder Acrylnitril-Polymer enthält.

11. Verfahren nach Anspruch 9, bei dem das gesamte oder ein Teil des Polyetherpolyols mit aromatischem Ester modifiziertes Polyetherpolyol ist.

12. Verfahren nach einem der Ansprüche 9 bis 11, bei dem das Polyetherpolyol eine Viskosität bei 25 °C im Bereich von 5 bis 15 Pa.s (5.000 bis 15.000 Centipoise) aufweist.

13. Verfahren nach einem der Ansprüche 9 bis 12, bei dem der Schaum nicht zusammengepreßt in einen Tintenbehälter eingesetzt wird.

## Revendications

1. Dispositif de rétention d'encre comprenant une mousse de polyuréthane retenant l'encre avec des diamètres de cellules de la mousse compris dans l'intervalle allant de 80 à 400 pm, préparé en introduisant les composants formant une mousse de polyuréthane suivants :
- polyéther polyol ayant une viscosité comprise dans l'intervalle allant de 1,5 à 30 Pa.s (1 500 à 30 000 centipoises) à 25°C ;
- isocyanate ;
- agent de stabilisation de mousse ;
- catalyseur, et
- eau comme agent soufflant, en une quantité allant de 0,9 à 2,5 parties en poids pour 100 parties du polyéther polyol ;
simultanément dans une tête malaxeuse pour une réaction de condensation et un moussage pour former ladite mousse.

2. Dispositif de rétention d'encre selon la revendication 1, dans lequel tout ou partie du polyéther polyol est un polyol copolymère contenant un polymère de styrène et/ou d'acrylonitrile.

3. Dispositif de rétention d'encre selon la revendication 1, dans lequel tout ou partie du polyéther polyol est un polyéther polyol modifié par un ester aromatique.

4. Dispositif de rétention d'encre selon l'une quelconque des revendications précédentes, dans lequel le polyéther polyol a une viscosité comprise dans l'intervalle allant de 5 à 15 Pa.s (5 000 à 15 000 centipoises) à 25°C.

5. Dispositif de rétention d'encre selon l'une quelconque des revendications précédentes, dans lequel la mousse a une densité comprise dans l'intervalle allant de 0,04 à 0,1 g/cm³.

6. Dispositif de rétention d'encre selon l'une quelconque des revendications précédentes, dans lequel au moins 90 % des cellules de la mousse ont des diamètres compris dans l'intervalle allant de 100 à 300 µm.

7. Dispositif de rétention d'encre selon l'une quelconque des revendications précédentes, dans lequel les membranes des cellules de la mousse ont été éliminées.

8. Dispositif de rétention d'encre selon l'une quelconque des revendications précédentes, dans lequel la mousse est contenue dans un réservoir d'encre sans compression.

9. Méthode de préparation d'un dispositif de rétention d'encre comprenant une mousse de polyuréthane, dans laquelle la mousse de polyuréthane est préparée en introduisant les composants formant une mousse de polyuréthane suivants :
- polyéther polyol ayant une viscosité comprise dans l'intervalle allant de 1,5 à 30 Pa.s (1 500 à 30 000 centipoises) à 25°C ;
- isocyanate ;
- agent de stabilisation de mousse ;
- catalyseur, et
- eau comme agent soufflant, en une quantité allant de 0,9 à 2,5 parties en poids pour 100 parties du polyéther polyol ;
simultanément dans une tête malaxeuse pour une réaction de condensation et un moussage pour former ladite mousse avec des diamètres de cellules de mousse compris dans l'intervalle allant de 80 à 400 µm.

10. Méthode selon la revendication 9, dans laquelle tout ou partie du polyéther polyol est un polyol copolymère contenant un polymère de styrène et/ou d'acrylonitrile.

11. Méthode selon la revendication 9, dans laquelle tout ou partie du polyéther polyol est un polyéther polyol modifié par un ester aromatique.

12. Méthode selon l'une quelconque des revendications 9 à 11, dans laquelle le polyéther polyol a une viscosité comprise dans l'intervalle allant de 5 à 15 Pa.s (5 000 à 15 000 centipoises) à 25°C.

13. Méthode selon l'une quelconque des revendications 9 à 12, dans laquelle la mousse est insérée dans un réservoir d'encre sans compression.
